# EUROPEAN PATENT SPECIFICATION

(11) **EP 1 526 096 B1**
(45) Date of publication and mention of the grant of the patent: **20.09.2006**
(21) Application number: 02772428.5
(22) Date of filing: 01.10.2002
(51) Int. Cl.: B65D 85/57, G11B 33/04

(54) **CASE FOR STACKING AND REMOVING DISCS**
HÜLLE ZUM STAPELN UND HERAUSNEHMEN VON PLATTEN
BOITIER POUR EMPILEMENT ET EXTRACTION DE DISQUES

(30) Priority: 02.05.2002 ES 200201063
(43) Date of publication of application: 27.04.2005
(73) Proprietor: Leunamme Engineering S.L., 50004 Zaragoza (ES)
(72) Inventor: GARCIA DE LA PENA RAZQUIN, Emmanuel, 50004 Zaragoza (ES)
(74) Representative: Gallego Jiménez, José Fernando
(86) International application number: PCT/ES2002/000460
(87) International publication number: WO 2003/104111

(56) References cited:
- WO-A1-98/04478

## Description

Present invention describes a compact and DVD disc case capable to be stacked one over the other, enabling at the same time to extract the disc from the case without removing the single case from the stack, therefore keeping the initial sorting of discs.

### STATE OF THE ART

CD and DVD jewel cases available in the market does not allow a proper stacking since they have no reference point between cases that ensures a good alignment of the cases. Besides, existing cases does not allow the extraction of the disc without removing the single case from the pile, since its opening system, book sort, makes mandatory to remove the case from the pile to subsequently open the case and extract the disc.

Current cases are rectangular shaped and discs are rounded, presenting a material excess that has no function, since disc protection can be made with a case rounded in the corners.

There is no background of single stacking cases with matching references among them that enable access to the disc by pivoting the disc base, made of two single parts, rounded in three corners, and with a platform that enables to build a rack of cases.

Closest prior art can be considered document WO-A-9 804 478, which discloses a stackable disc case comprising an outer cover made of two separate members.

### INVENTION DESCRIPTION

Invention consist in a CD and DVD case design that enables a sorted stack and an easy disc extraction.

The case is comprised by an outer cover that protects the upper part of the disc and by an inner cover that protects the lower part of the disc, and matches with the upper face of the outer cover of the below single case.

The outer cover has a design that ensures a proper aligned stacking and that ensures the lack of rotation of the outer cover when operating the inner cover.

The inner cover is also the disc base.

With the aim of saving material, in its main variant, the case of this invention is rounded in all the corners except the ones that contains the axle and the handle.

Outer and inner covers include fixing elements for the labels.

To ensure a minimum distance among piles that enables the extraction of the discs, and to improve the pile stability in heights bigger than 20 units, a platform is created. This platform contains the same matching ribs as the covers.

The main advantages of this case are:
1. Perfect aligned stacking and sorting of the discs.
2. Easy extraction of the discs keeping the initial stock sort. With standard jewel cases, unless they are classified in a rack, after the disc is removed from the pile, the user puts it back on top of the pile, changing continually the sort of the pile.
3. Material saving and therefore lower manufacturing costs.
4. Bigger stock capacity, since its thickness is lower than the standard jewel cases one.
5. Only one hand is needed for extracting a disc from the pile.

### DRAWING DESCRIPTION

In Figure 1 there is a overview of the invention, where the inner cover is turned regarding the exterior one up to the position where the disc can be extracted.
Figure 2 shows the section "AA'" marked in Fig. 1

The outer cover (10) comprises:
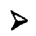 A rib (11) that matches over the shape (12) of the lower face of the outer cover. To avoid friction during the opening of the inner cover, the thickness "e" of the rib (11) must be smaller than the thickness "E" of the exterior cover in the lower face (12).
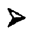 Two holes (13) to incorporate the axle (21) of the inner cover (20)
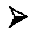 A first shape (14) and a second shape (15) that actuate as rotation-stop device of the outer cover.
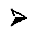 Elements (17) to fix the label.

The inner cover (20) comprises:
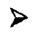 The disc base with an disc centring element (22)
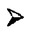 The shape (23) that acts as a handle for extracting the disc with a finger.
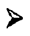 The wall (24) that closes the case in the area where the wall (16) of the outer cover is stopped to allow the turning of the inner cover (20).
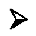 The elements (25) are for fixing the label in the inner cover.

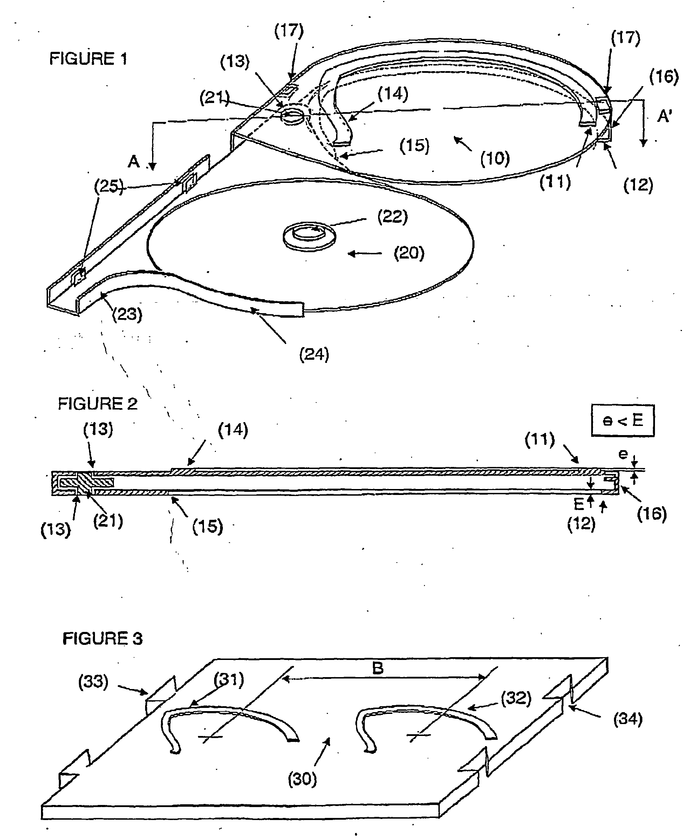

Figure 3 shows the platform where the cases are stacked. Contains two ribs (31) and (32) that matches in the shape (12) in the same way that it is done by the rib (11). The distance between axles of the piles "B" is in a way that enables the turning of the inner covers of the pile to extract the discs without chafing with the nearest pile.
The Platform comprises connecting elements (33) and (34) to provide a robust alignment of consecutive pairs of piles.

### INVENTION EMBODIMENT

The cheapest manufacturing process is the plastic injection.
The three described elements: outer cover, inner cover and platform are shapes that can be built in an injection mould, without material flow or demolding potential problems.
Normally the outer cover will be made of transparent plastic and the inner one of black plastic.

## Claims

1. Stackable and access-free disc case comprising a single piece outer cover (10) and a single inner cover (20), the inner cover (10) being provided with elements (22) for receiving the disc, said outer cover (10) having an upper and a lower face parallel to each other, the outer cover (10) incorporating on its outer upper face pins and ribs and in its lower face openings to match said pins and ribs for stacking said cases; said inner cover (20) incorporating a pivoting axle (21) that fits into two holes in upper and lower faces of the outer cover (13), respectively.

2. Stackable and access free disc case as the one described in claim 1 where those pins and ribs are located and shaped in a way that single cases can be steadily stacked aligned vertical wise and not rotating among them when opening any single inner cover of any of the single cases of the stack.

3. Stackable and access free disc case as the one described in claim 1 where the cover has squared or rectangular outer shape.

4. Stackable and access free disc case as the one described in claim 1 where the cover has one or more of the corners rounded.

5. Stackable and access free disc case as the one described in claim 1where the outer and inner cover have provisions for labels (17; 25).

6. Platform for stacking disc cases according to claims 1 to 5, wherein said platform has on its upper face pins and ribs matching the openings on the lower face of the outer cover (20), and trapezoidal connecting elements at one side edge of said platform and matching trapezoidal openings at the opposite edge of said platform allowing alignment of consecutive platforms.

7. Platform as the one described in claim 6 where the distance among its pins and ribs allows the opening of any single cover of any stack without interference with the nearest stack of a consecutive platform.

## Patentansprüche

1. Hülle zum Stapeln und Herausziehen von Compact Discs, bestehend aus einer einzelnen äußeren Abdeckung (10) und einer einzelnen inneren Abdeckung (20), die innere Abdeckung (20) ist mit Elementen (22) zur Aufnahme der Disc ausgestattet, die besagte äußere Abdeckung (10) inkorporiert an ihrer Außenseite Zentriervorrichtungen und Verstärkungsrippen und an ihrer Innenseite Öffnungen, die mit den besagten Zentriervorrichtungen und Verstärkungsrippen übereinstimmen, um die besagten Hüllen zu stapeln; die besagte innere Hülle (20) inkorporiert eine Drehachse (21), die in zwei Löcher in der Oberseite und der Unterseite der äußeren Abdeckung (13) jeweils einpassen.

2. Hülle zum Stapeln und Herausziehen von Compact Discs nach Anspruch 1, bei der die besagten Zentriervorrichtungen und Verstärkungsrippen in der Weise angeordnet und gebildet sind, dass die Hüllen in einer stabilen und vertikal ausgerichteten Weise gestapelt werden können, und sich nicht untereinander verdrehen, wenn eine innere Abdeckung einer der einzelnen Hüllen des Stapels geöffnet wird.

3. Hülle zum Stapeln und Herausziehen von Compact Discs nach Anspruch 1, bei der die äußere Form quadratisch oder rechteckig ist.

4. Hülle zum Stapeln und Herausziehen von Compact Discs nach Anspruch 1, bei der irgendeine der Abdeckungen irgendeine ihrer Ecken abgerundet hat.

5. Hülle zum Stapeln und Herausziehen von Compact Discs nach Anspruch 1, bei der die Abdeckungen Vorrichtungen für Etiketten (17; 25) besitzen.

6. Plattform zum Stapeln von Hüllen zum Stapeln und Herausziehen von Compact Discs nach einem der Ansprüche 1 bis 5, bei der die besagte Plattform an ihrer Oberseite Zentriervorrichtungen und Verstärkungsrippen besitzt, die in die Öffnungen der Unterseite der äußeren Abdeckung (20) einpassen, Elemente mit trapezoidförmiger Verbindung an einer Seite und trapezoidförmige Öffnungen auf der gegenüber liegenden Seite der besagten Plattform, was die aufeinander folgende Ausrichtung der Plattformen gestattet.

7. Plattform nach Anspruch 6, bei der der Abstand zwischen den Zentriervorrichtungen und den Verstärkungsrippen die Öffnung einer einzelnen Abdeckung eines beliebigen Stapels gestattet, ohne bei dem nächst gelegenen Stapel der darauf folgenden Plattform zu interferieren.

## Revendications

1. Étui pour l'empilage et l'extraction de disques compacts composé d'un unique couvercle externe (10) et d'un unique couvercle interne (20), le couvercle interne (20) étant pourvu d'éléments (22) propres à recevoir le disque, ledit couvercle externe (10) comporte sur sa face externe supérieure des centreurs et des nervures et sur sa face inférieure des ouvertures qui coïncident avec lesdits centreurs et nervures pour empiler lesdits étuis ; ledit couvercle interne (20) comporte un axe de rotation (21) qui s'emboîte dans deux trous sur la face supérieure et inférieure du couvercle externe (13), respectivement.

2. Étui pour l'empilage et l'extraction de disques compacts comme celui décrit à la revendication 1 où lesdits centreurs et nervures sont disposés et conçus de manière à ce que les étuis puissent être empilés de façon stable et alignés à la verticale et ne tournent pas parmi eux quand on ouvre un couvercle interne quelconque de n'importe lequel des étuis unitaires de la pile.

3. Étui pour l'empilage et l'extraction de disques compacts comme celui décrit à la revendication 1 où la forme externe est carrée ou rectangulaire.

4. Étui pour l'empilage et l'extraction de disques compacts comme celui décrit à la revendication 1 où l'un des coins de l'un des couvercles est arrondi.

5. Étui pour l'empilage et l'extraction de disques compacts comme celui décrit à la revendication 1 où les couvercles présentent un espace prévu pour les étiquettes (17 ; 25)

6. Plate-forme pour empiler un étui pour l'empilage et l'extraction de disques compacts comme celui décrit aux revendications 1 à 5 où ladite plate-forme présente sur sa face supérieure des centreurs et des nervures qui s'emboîtent dans les ouvertures de la face inférieure du couvercle externe (20), des éléments de connexion trapézoïdaux sur un côté et des ouvertures trapézoïdales sur le côté opposé de ladite plate-forme ce qui permet l'alignement consécutif de plates-formes.

7. Plate-forme comme celle décrite à la revendication 6 où la distance entre les centreurs et les nervures permet l'ouverture d'un couvercle unitaire de n'importe quelle pile sans que cela interfère avec la pile la plus proche de la plate-forme suivante.
